# EUROPEAN PATENT SPECIFICATION

(11) **EP 4 603 250 B1**
(45) Date of publication and mention of the grant of the patent: **12.08.2026**
(21) Application number: 25152429.4
(22) Date of filing: 17.01.2025
(51) Int. Cl.: B29B 7/74, B29B 7/76, B29B 7/80, B29C 44/42, B29C 45/20, B29C 45/23, B29C 44/34

(54) **INJECTION HEAD FOR EXPANDABLE POLYMER FOAMS WITH ANTI-SEIZE CONTROL**
EINSPRITZKOPF FÜR EXPANIERBARE POLYMERSCHÄUME MIT ANTI-SEIZE KONTROLLE
TÊTE D'INJECTION POUR DES MOUSSES POLYMÈRES EXPANSIBLES AVEC CONTRÔLE ANTI-GRIPPAGE

(30) Priority: 19.02.2024 IT 202400003406
(43) Date of publication of application: 20.08.2025
(73) Proprietor: Astom S.r.l., 20136 Milano (IT)
(72) Inventor: MORETTI, Bruno, 20136 Milano (IT)
(74) Representative: Faggioni, Carlo Maria

(56) References cited:
- EP-A2- 1 927 448
- EP-B1- 0 451 921
- US-A- 4 486 102
- US-A1- 2021 016 236

## Description

### FIELD OF THE INVENTION

The present invention relates to the field of injection heads for polyurethane and/or polymeric foams in general. In particular, it relates to an anti-seize injection head.

### STATE OF PRIOR ART

The production of foams made of polymeric materials, in particular expandable polyurethane, occurs through the reaction between a di-isocyanate and an alcohol (such as a polyol) or water. The reaction between di-isocyanate and other components quickly generates a foam, whose physical characteristics such as density, weight, stiffness, elasticity depend on the type of use for which the foam is intended.

These polyurethane foams are used extensively in insulation applications, particularly in the production of insulating panels for cold rooms or cooling appliances (refrigerators or freezers).

In these applications, polyurethane foam is typically obtained by mixing the two (or more) components directly in an injection head, which directs the foam through a nozzle and then into the compartment to be filled (e.g. the door of a refrigerator), while the chemical reaction that causes the foam to expand takes place. In a relatively short time, the chemical reaction produces a strong expansion of the material and a subsequent cross-linking that causes the foam to harden.

Injection heads usually comprise a mixing duct, terminating in an injection nozzle, into which converge a multitude of separate supply ducts, each of which bring one of the polyurethane foam pressurized components.

Inside the mixing duct and injection nozzle, a control rod is sliding mounted, the purpose of which is to close or open the inlet ports of the supply ducts in the mixing duct.

It is thus possible to identify essentially two different working positions of the mixing head. A first position, defined as active mixing, in which the control rod is in the back position, which opens the inlet ports and allows the flow of components (alcohols and isocyanates) and any additives from their respective supply systems towards the mixing head's mixing duct, where, once mixed, they are ejected through the injection nozzle. A second working position, defined as closed, occurs when the control rod is moved to a forward position and closes the inlet ports in the mixing duct, preventing the inflow of components, and cleans the injection nozzle of residing residual components and additives.

An examplary injection head is disclosed in EP1927448.

A common problem with the use of these foaming heads is caused by cured foam residue remaining in the injection nozzle after the control rod has closed the inlet ports.

In fact, hardened foam not only tends to partially obstruct certain passages, reducing the effectiveness of the injection head, but also leads to progressive seizure of the rod in the nozzle, which requires frequent maintenance and sometimes the entire head disassembly.

Since this problem has existed for a long time, some possible solutions have already been proposed, such as the configurations illustrated in KR10-1450214, EP1927448, EP 0451 921 and US 2021/016236. These patent documents disclose solutions to keep the mixing duct and the parts of the duct feeding system clean by employing specific configurations to remove fouling (hardened residue) with a longitudinal sliding motion and the possible aid of recesses and surface grooves. However, cleaning efficiency is still low, and seizure problems still occur if careful procedures are not carried out at component supply interruptions.

### PROBLEM AND SOLUTION

The problem behind the invention is therefore to provide an injection head that overcomes the mentioned drawbacks.

This is achieved by means of an injection head as described in its essential elements in the attached main claim.

Subordinate claims describe preferential features of the invention.

### BRIEF DESCRIPTION OF THE DRAWINGS

Further features and advantages of the injection head according to the present invention will, however, be better evident from the following detailed description of some preferred embodiments of the same, provided purely by way of example and not limitation and illustrated in the accompanying drawings, in which
Fig. 1 is a side elevation view of a mixing and injection head according to a first embodiment of the present invention;
Fig. 2 is a longitudinal cross-sectional view along the C-C line of the mixing and injection head of Fig. 1;
Fig. 3 is a cross-sectional view along the E-E line of Fig. 1;
Fig. 4 is a perspective view of a mixing and injection head according to a different embodiment of the present invention;
Fig. 5 is a longitudinal sectional view of the mixing and injection head of Fig. 4; and
Fig. 6 is a perspective view of internal components of the embodiment of Fig. 5.

### DETAILED DESCRIPTION OF PREFERRED EMBODIMENTS

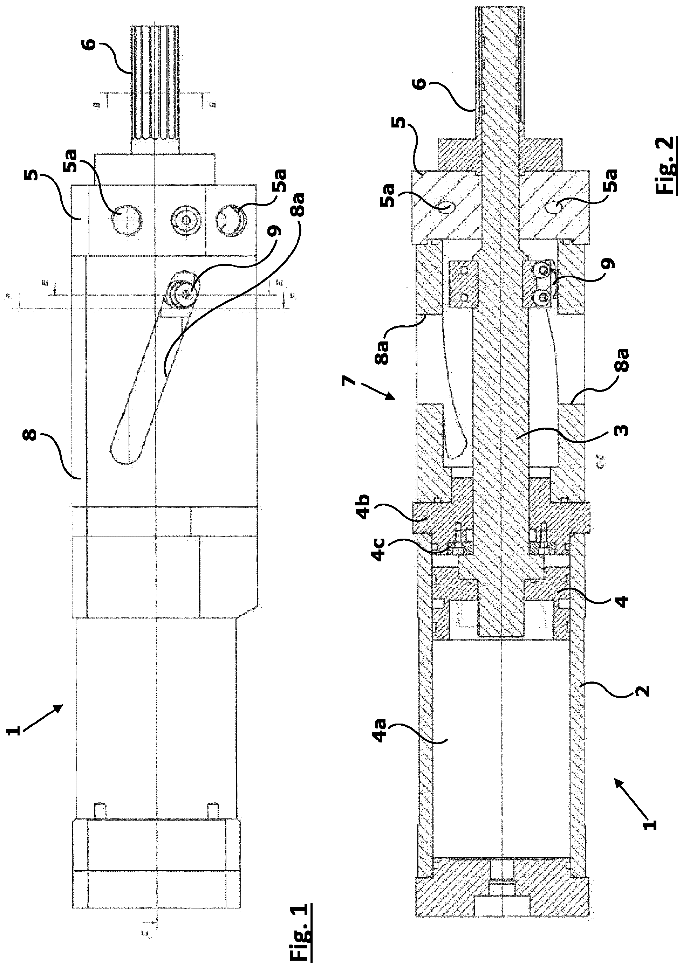

Figs. 1 and 2 illustrate a first embodiment of a mixing and injection head according to the present invention. The mixing and injection head 1 is formed, in a known manner per se, of a cylindrical body 2 housing within it a shutter stem 3 driven in longitudinal translation by a plunger 4 slidingly mounted in a cylindrical pressure chamber 4a.

In particular, the shutter stem 3 is arranged on the longitudinal centre axis of the cylinder body 2 and passes through a guide septum 4b - by means of appropriate seals 4c - which in turn is arranged fixed transversely to the cylinder body 2. In this way, the plunger 4 is pushed back and forth in the pressure chamber 4a, between the guide septum 4a and a rear end cap 2a of the cylinder body 2.

At the front, the shutter stem 3 enters an inflow and mixing body 5 and axially into an injection nozzle 6 protruding from the former. In the inflow and mixing body 5 there are provided supply channels 5a converging radially to a central supply conduit wherein the shutter stem 3 is sliding. The converging supply channels 5a are then connected to external reservoirs from which the components to be mixed to obtain the foamed material at the outlet of the injection nozzle 6 are sourced.

When the shutter stem 3 is in its forward position (Fig. 2), fully inserted into the central supply duct and nozzle 6, it obstructs the inlet ports of the radial supply ducts 5a, preventing components being fed to the head from entering the central supply duct and mixing with each other. Conversely, when shutter rod 3 is retracted, it clears the inlet ports and components can freely flow into the central supply duct, mix with each other and then exit through nozzle 6.

The complete operation of shutter stem 3 will be explained in detail later.

According to the invention, on the back of the inflow and mixing body 5, the injection head 1 has a guiding cage 7 comprising a fixed constraining member, integral with the cylindrical body 2, and a helical follower element, integral with the shutter stem 3.

In the embodiment illustrated in Figs. 1 and 2, the fixed constraining member is in the form of a tubular sleeve 8, coaxial with the shutter stem 3, with a cylindrical wall provided with an opposing pair of grooves or slots 8a inclined in helical form with respect to the longitudinal axis (as clearly visible in Fig. 1). The follower element comprises a pair of opposing guide pins 9, which are attached to and protrude radially from the shutter stem 3, and are slidingly engaged in the corresponding pair of grooves 8a.

Preferably, guide pins 9 are equipped with bearing elements 9a arranged to slide with reduced friction in grooves 8a.

The guide pins 9 and corresponding grooves 8a can also be in different numbers.

Due to this configuration, during the longitudinal movement of the shutter stem 3, the mechanical constraint defined by the guiding cage 7 (comprising a part with a helical guide and a part with guide pins) also imposes a rotation to the stem 3 about its longitudinal axis. This axial rotation causes detachment between the surfaces of the stem 3 and those of the central supply duct and nozzle 6, even in the presence of polyurethane residue that tends to stick the surfaces together, thus avoiding undesirable seizing and frequent maintenance.

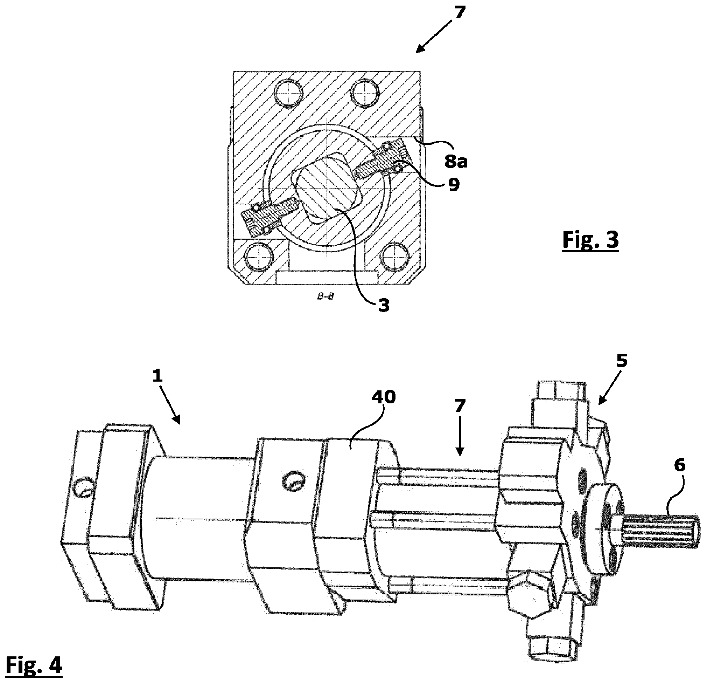

Figs. 3 and 4 show a second embodiment, in which the guiding cage 7 has different components from the first embodiment. Otherwise, the injection head components are identical or equivalent to those of the first embodiment.

In this case, one or more radial pins 31 are fixed to the shutter stem 30, which act as a follower element within grooves or cams 32 formed in the wall of a small cylinder or hub 33 having a central hole in which the stem 30 slides. The grooves or cams 32, as in the first embodiment, are inclined in helical shape with respect to the longitudinal axis, so as to guide the radial pins 31 in a rotation on the sliding axis of the stem 30 while the latter slides longitudinally forward or backward.

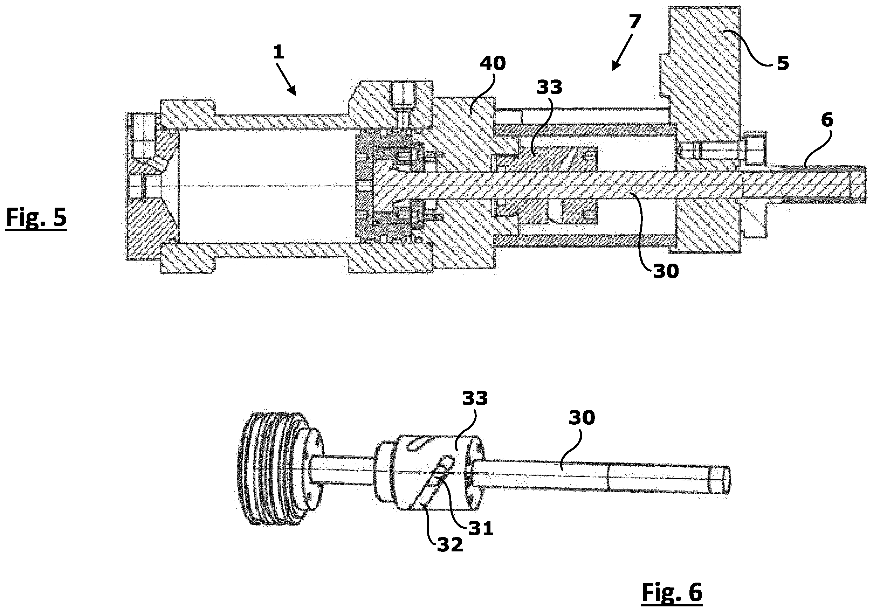

The cylinder 33 is constrained in a fixed position relative to the head housing 1, for example - as shown in Fig. 5 - it is fixed to a guide septum 40.

In all cases, during operation, the sliding movement of the shutter stem 3, 30 - due to the guiding cage configuration of the invention - is not exclusively linear. In fact, the stem 3, 30 is controlled by the plunger 4 according to a back and forth longitudinal sliding movement - a movement that correspondingly closes and opens the component supply ducts - but at the same time performs a rotary movement around its own longitudinal axis, guaranteed by the constraint of the guiding cage, which favours the unblocking of any adhesions caused by the polyurethane material that is inevitably found between the sliding surfaces (which necessarily have a minimum play between them).

As can be understood from the above description, the solution taught here enables the purposes set out in the introduction to be achieved perfectly. The axial rotation action obtained in a passive manner - i.e. without any additional actuators other than the traditional one provided for moving the shutter stem - makes it possible to achieve a very effective unblocking action, which reduces the possibility of seizing and makes it possible to reduce the number of maintenance interventions.

It is understood, however, that the invention should not be considered limited to the particular arrangements illustrated above, which are only exemplary embodiments of it, but that several variants are possible, all within the reach of a person skilled in the art, without thereby going beyond the scope of protection of the invention itself, as defined by the following claims.

For example, the guiding cage may have inverted components, compared to what has been shown i.e. a plurality of radial pins integral to the injection head housing and a cam body integral in movement with the shutter stem, equipped with guiding surfaces inclined with respect to the longitudinal axis, which, in cooperation with the fixed radial pins, causes the same to perform a rototranslatory movement when sliding back and forth.

## Claims

1. An injection head (1) for making hardening foams, comprising a housing in which are housed
an inflow and mixing body (5) equipped with a central supply duct connected to an injection nozzle (6) and a plurality of supply channels (5a) of fluid components to be mixed converging on said central supply duct, and
a shutter stem (3, 30) mounted sliding longitudinally at least partially in said central supply duct and injection nozzle (6) according to an alternating forward and backward movement which respectively closes and opens inflow ports of said supply channels (5a) in said central supply duct,
**characterised by** that
it further comprises a guiding cage (7) arranged around said shutter stem (3, 30) to guide said shutter stem (3, 30) according to a rotation on its longitudinal axial upon said longitudinal sliding.

2. The injection head as in claim 1), wherein said guiding cage (7) comprises a fixed constraining member (8, 8a, 32, 33), integral with said casing, and a follower member (9, 31), integral with said shutter stem (3, 30) engaged with each other according to a helical constraint.

3. The injection head as in claim 2), wherein said fixed constraining member is in the shape of a tubular sleeve (8), coaxial with said shutter stem (3), having a cylindrical wall provided with an opposing pair of grooves or slots (8a) inclined with respect to a longitudinal axis of said shutter stem (3).

4. The injection head as in claim 3), wherein said follower member comprises a pair of opposing guide pins (9), attached to and radially projecting from said shutter stem (3) and slidingly engaged in the corresponding pair of grooves or slots (8a).

5. The injection head as in claim 2), wherein said fixed constraining member is in the shape of a small cylinder (33) provided with grooves or cam surfaces (32) inclined with respect to a longitudinal axis of said shutter stem (30), provided with a central longitudinal bore in which said shutter stem (30) is slidable.

6. The injection head as in claim 5), wherein said follower member element is in the shape of one or more pins (31) radially integral with said shutter stem (30).

## Patentansprüche

1. Ein Einspritzkopf (1) zur Herstellung von härtenden Schäumen, umfassend ein Gehäuse, in dem untergebracht sind
ein Zufluss- und Mischkörper (5) mit einem zentralen Zuführkanal, der mit einer Einspritzdüse (6) verbunden ist, sowie einer Vielzahl von Zufuhrkanälen (5a) für zu mischende Fluidkomponenten ausgestattet ist, die in den zentralen Zuführkanal zusammenlaufen, und
einen Verschlussstift (3, 30), der zumindest teilweise in Längsrichtung in dem zentralen Zuführkanal und der Einspritzdüse (6) verschiebbar gelagert ist und eine alternierende Vorwärts- und Rückwärtsbewegung ausführt, die die Einlassöffnungen der Zufuhrkanäle (5a) in dem zentralen Zuführkanal jeweils verschließt bzw. öffnet,
**dadurch gekennzeichnet, dass**
er ferner einen um den Verschlussstift angeordneten Führungskäfig (7) umfasst (3, 30), um den Verschlussstift (3, 30) bei seiner Längsverschiebung gemäß einer Drehung um seine Längsachse zu führen.

2. Einspritzkopf nach Anspruch 1), wobei der Führungskäfig (7) ein feststehendes Begrenzungselement (8, 8a, 32, 33), das einstückig mit dem Gehäuse ausgebildet ist, und ein Mitnehmerelement (9, 31) umfasst, das einstückig mit dem Verschlussstift (3, 30) ausgebildet ist und mit diesem in einer spiralförmigen Begrenzung in Eingriff steht.

3. Einspritzkopf nach Anspruch 2), wobei das feststehende Begrenzungselement die Form einer rohrförmigen Hülse (8) aufweist, koaxial zum Verschlussstift (3) ist und eine zylindrische Wand aufweist, die mit einem gegenüberliegenden Paar von Nuten oder Schlitzen (8a) versehen ist, die in Bezug auf eine Längsachse des Verschlussstifts (3) geneigt sind.

4. Einspritzkopf nach Anspruch 3), wobei das Mitnehmerelement ein Paar gegenüberliegender Führungsstifte (9) umfasst, die an dem Verschlussstift (3) befestigt sind, radial von dieser vorstehen und gleitend in das entsprechende Paar von Nuten oder Schlitzen (8a) eingreifen.

5. Einspritzkopf nach Anspruch 2), wobei das feststehende Begrenzungselement die Form eines kleinen Zylinders (33) aufweist, der mit Nuten oder Nockenflächen (32) versehen ist, die in Bezug auf eine Längsachse des Verschlussstifts (30) geneigt sind, und der eine zentrale Längsbohrung aufweist, in der der Verschlussstift (30) verschiebbar ist.

6. Einspritzkopf nach Anspruch 5), wobei das Mitnehmerelement die Form eines oder mehrerer Stifte (31) aufweist, die radial einstückig mit dem Verschlussstift (30) ausgebildet sind.

## Revendications

1. Tête d'injection (1) pour la fabrication de mousses durcissantes, comprenant un logement dans lequel sont logés
un corps d'admission et de mélange (5) équipé d'un conduit d'alimentation central relié à une buse d'injection (6) et d'une pluralité de canaux d'alimentation (5a) de composants fluides à mélanger convergeant sur ledit conduit d'alimentation central, et
une tige d'obturation (3, 30) montée de manière coulissante longitudinalement au moins partiellement dans ledit conduit d'alimentation central et la buse d'injection (6) selon un mouvement alternatif vers l'avant et vers l'arrière qui ferme et ouvre respectivement des orifices d'admission desdits canaux d'alimentation (5a) dans ledit conduit d'alimentation central,
**caractérisée en ce que**
elle comprend en outre une cage de guidage (7) agencée autour de ladite tige d'obturation (3, 30) pour guider ladite tige d'obturation (3, 30) selon une rotation sur son axe longitudinal lors dudit coulissement longitudinal.

2. Tête d'injection selon la revendication 1), dans laquelle ladite cage de guidage (7) comprend un organe de contrainte fixe (8, 8a, 32, 33), solidaire dudit carter, et un organe suiveur (9, 31), solidaire de ladite tige d'obturation (3, 30) en prise l'un avec l'autre selon une contrainte hélicoïdale.

3. Tête d'injection selon la revendication 2), dans laquelle ledit organe de contrainte fixe est sous la forme d'un manchon tubulaire (8), coaxial avec ladite tige d'obturation (3), présentant une paroi cylindrique pourvue d'une paire opposée de rainures ou fentes (8a) inclinées par rapport à un axe longitudinal de ladite tige d'obturation (3).

4. Tête d'injection selon la revendication 3), dans laquelle ledit organe suiveur comprend une paire de goupilles de guidage opposées (9), fixées à ladite tige d'obturation (3), et faisant saillie radialement à partir de celle-ci, et en prise de manière coulissante dans la paire correspondante de rainures ou de fentes (8a).

5. Tête d'injection selon la revendication 2), dans laquelle ledit organe de contrainte fixe est sous la forme d'un petit cylindre (33) pourvu de rainures ou de surfaces de came (32) inclinées par rapport à un axe longitudinal de ladite tige d'obturation (30), pourvu d'un alésage longitudinal central dans lequel ladite tige d'obturation (30) peut coulisser.

6. Tête d'injection selon la revendication 5), dans laquelle ledit élément d'organe suiveur est sous la forme d'une ou plusieurs goupilles (31) solidaires radialement de ladite tige d'obturation (30).
